# EUROPEAN PATENT APPLICATION

(11) **EP 1 136 929 A2**
(43) Date of publication of application: **26.09.2001**
(21) Application number: 01301635.7
(22) Date of filing: 22.02.2001
(51) Int. Cl.: G06F 17/60

(54) **Personal information verification method in electronic-commerce system**

(30) Priority: 24.02.2000 JP 2000047250; 29.01.2001 JP 2001020746
(71) Applicant: Jintec Corporation, Tokyo (JP)
(72) Inventor: Utsumi, Katsunori, Ashigarashimo-gun, Kanagawa (JP)
(74) Representative: Brown, Kenneth Richard

(57) **Abstract**

A method for verifying personal information of a customer based on his telephone number, by using means automatically operated easily and at high-speed in a computer system, during a process in which the customer uses an e-commerce system. In a process in which a member-user terminal (2) and a transaction server (1) communicate to proceed an electronic-commerce procedure, if a telephone number of a member-user using the member-user terminal has been determined to be null by a telephone number research device (3), a WARNING message is sent to the member-user terminal. The WARNING message is such as to encourage the member-user to make a notification if there have been any changes in his personal information such as his telephone number.

## Description

### BACKGROUND OF THE INVENTION

The present application claims priority upon Japanese Patent Application No. 2000-47250 filed on February 24, 2000, and Japanese Patent Application No. 2001-20746 filed on January 29, 2001, which are herein incorporated by reference.

### Field of the Invention

The present invention relates to an electronic-commerce (e-commerce) system worked on a network such as the Internet. Particularly, the present invention relates to a method for verifying personal information in an e-commerce system.

### Description of the Related Art

Currently, many e-commerce systems are worked on the Internet. Through these e-commerce systems, it is possible for a person to carry out commercial transactions, such as ordering and purchasing merchandise or services, by accessing to the Internet through the use of an information terminal such as a personal computer or a mobile phone. In many of these e-commerce systems, for the purpose of preventing illegal dealings, a manager of the system concludes a membership contract with a user, and makes a member list based on personal information informed by the member-user to manage such personal information while actually performing e-commerce.

A typical problem occurring during e-commerce is that payment is not fulfilled even though an item has been sent to a customer. In some e-commerce systems, basic personal information, such as name, address, telephone number, date of birth and gender, and in some cases, additional personal information, such as employment and income, are researched and verified when concluding a transaction contract with a customer. Such personal information verified upon sign-up is registered to a member list (customer list) on a server of the e-commerce system. This list and the personal information therein are used when necessary.

In such a case, it is of significant importance that when personal information, such as the customer's address or telephone number, has changed, such a change is duly and promptly reflected to the member list. If management of personal information is not appropriately conducted, in some cases, an inconsistency may occur in a credibility inspection of a customer, and this may cause transaction trouble or bad debts.

Financial institutions such as banks take various steps to research and track credibility information of a customer and to renew such information. Continuous research using time and manpower is extremely effective in preventing transaction trouble or occurrence of bad debt. However, under present circumstances, it is not possible to perform a satisfactory credibility inspection which is cost-effective. Further, in e-commerce systems working on the Internet, since users living in various regions and who cannot be actually verified by the manager of an e-commerce system become customers, there is a need to contrive a realistic, rational and effective way to prevent occurrence of transaction troubles and bad debts.

### SUMMARY OF THE INVENTION

The present invention has been contrived in view of the above-mentioned problems, and an objective of the present invention is to provide a method for verifying personal information which focuses on and utilizes telephone number information among personal information of a user of an e-commerce system being worked on a network such as the Internet, and which is capable of precisely verifying personal information of the user.

Another objective of the present invention is to provide a method for verifying personal information to promptly detect that a telephone number formerly registered to a member list is null and thereby prevent transaction problems, by focusing on and utilizing telephone number information among personal information of a user of an e-commerce system being worked on a network such as the Internet.

A further objective of the present invention is to provide a personal information verification method in an electronic-commerce system worked by a server communicating with a user terminal via a network, the method comprising: a step wherein personal information of a plurality of member-users who have registered as a member is made into a database as a member list, the member list containing a telephone number for each member; a step wherein a telephone number research means connected to an ISDN as a subscriber terminal sends a SETUP message, which defines a telephone number on the member list as a called party number and includes a bearer capability information element designating unrestricted digital, audio, or the like, to the ISDN, obtains a message in reply thereto from the ISDN and performs a clear sequence, and analyzes the obtained message to detect whether the telephone number is effective or not; and a step, in a process where a member-user terminal and the server communicates to proceed an electronic-commerce procedure, wherein if a telephone number of a member-user using the member-user terminal was determined to be null by the research means, a WARNING message is sent to the member-user terminal, the WARNING message being such as to encourage the member-user to make a notification if there have been any changes in his personal information such as his telephone number.

The above-mentioned and other objectives of the present invention and some of the features of the present invention will be more clearly understood through the detailed descriptions given below with reference to the accompanying drawings.

### BRIEF DESCRIPTION OF THE DRAWINGS

For a more complete understanding of the present invention and the advantages thereof, reference is now made to the following description taken in conjunction with the accompanying drawings wherein:
Fig. 1 is a block diagram of one embodiment of an e-commerce system to which one aspect of the personal information verification method of the present invention is applied; and
Fig. 2 is a flow chart schematically showing the procedure of a telephone number research device in the e-commerce system.

### DETAILED DESCRIPTION OF PREFERRED EMBODIMENTS

### ==Basic Structure of the System==

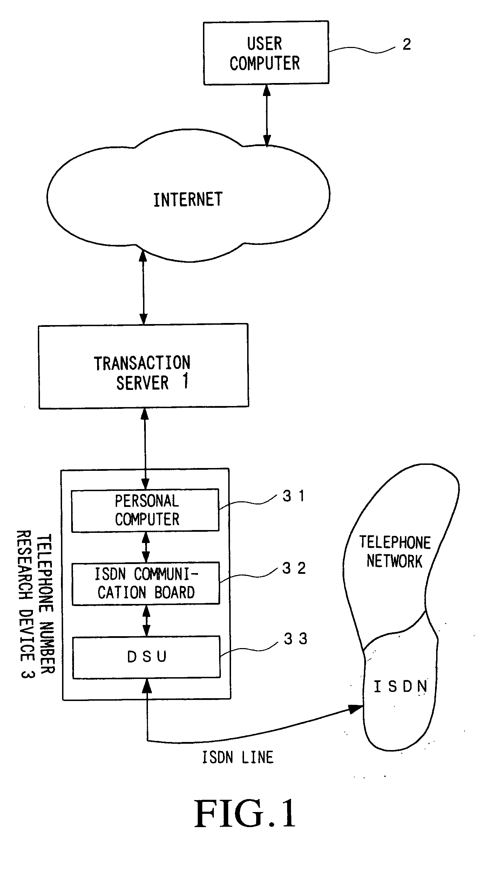

Fig. 1 shows a computer network configuration including an e-commerce system according to one embodiment of the present invention. A transaction server 1 communicates with a user computer 2 through the Internet by using the mechanism of the WWW, and conducts e-commerce procedures, such as selling of merchandise or services to the user. The main functions of the e-commerce system can be realized by conventional means and methods already used on the Internet, so such technology will not be explained herein.

In the e-commerce system of the present invention, a user is to sign-up (i.e., register) to become a member-user, and a member list, which is a database containing personal information of member-users, is created. The transaction server 1 manages this database and uses the database to process commercial transactions. That is, in this embodiment, the server 1 creates a database, as a member list, of personal information of users registered as members, based on the personal information received from the user computer 2. In other embodiments, it is possible for another server to create the member list database of personal information, and the server 1 may manage such a member list. The member list contains personal information such as name, address, date of birth, gender, telephone number, password and member ID number of each member-user.

The transaction server 1 is communicatably connected to a telephone number research device 3 via a private line. The telephone number research device 3 is mainly constituted of a typical personal computer 31. An ISDN communication board 32 is installed to the computer 31, and the research device 3 is connected to an ISDN line via a DSU 33. As is well known, an ISDN is integrally and mutually connected to a public telephone network such as an analog telephone network and a mobile telephone network.

### ==Research on Telephone Number==

The transaction server 1 communicates with the telephone number research device 3 via the private line, and transfers, at an appropriate timing, a list of telephone numbers of members included in the above-mentioned member list. The telephone number research device 3 automatically conducts a research on whether a telephone number on the telephone number list is an effective number actually being used, or if it is a null telephone number currently not being used. The telephone number research method is described in detail below. If the research device 3 detects, through the research, that a telephone number is null or has changed to a different number, the research device 3 informs the transaction server 1 of such result at an appropriate timing.

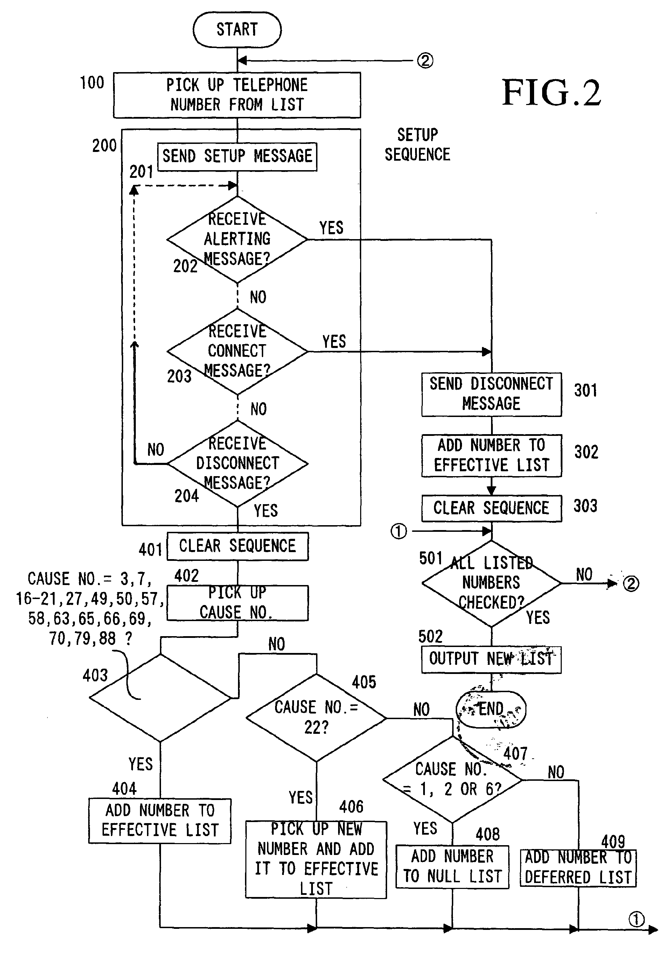

An algorithm of the telephone number research method will be sequentially explained below with reference to the flow chart in Fig. 2.

Firstly, one telephone number is picked up, according to a predetermined sequence, from the telephone number list stored in a storage device such as a hard disk of the computer 31 of the research device 3, and a SETUP sequence is started (Steps 100→200). In the SETUP sequence, a SETUP message, which defines the picked telephone number as a called party number and which designates "unrestricted digital" or "audio" as a bearer capability information, is created and sent to the network (ISDN) (Step 201). That is, the research device 3 decides whether the picked telephone number is a number of a mobile phone or not by referring to the first few digits in the string of numbers. If the picked telephone number is a number of a mobile phone, the bearer capability information is set to "audio". If the picked telephone number is not a number of a mobile phone, the bearer capability information is set to "unrestricted digital".

In the SETUP sequence 200, the procedure proceeds according to a circuit-switched call control procedure defined in detail in the ITU-T Recommendation Q.931. Detailed description of the circuit-switched call control procedure is omitted in this specification since a number of references provide precise explanation on them. A typical sequence of the procedure is processed as follows.

The network, which received the SETUP message from the calling terminal (research device 3), sends a CALL PROCEEDING message to the calling terminal, reporting a selected B-channel, and also sends the SETUP message to a called terminal. Through this process, various capabilities required to the called terminal are designated. The called terminal side checks the required capabilities. When the called terminal confirms the compatibility, the called terminal returns an ALERTING message to the network (i.e., the called terminal is alerted) . The network sends this ALERTING message to the calling terminal. If the called terminal responds by such as an off-hook action, a CONNECT message is sent to the calling terminal from the called terminal via the network. Then a CONNECT ACKNOWLEDGE message is sent from the calling terminal to the network, and from the network to the called terminal in response to the CONNECT message. According to the above sequence, the SETUP message is accepted, and connection between the two terminals is verified.

In some cases, a call requested from the calling terminal may not be accepted for various reasons. The network sends a DISCONNECT message to the calling terminal to perform a clearing sequence for those cases. The reason why the call was not accepted is reported to the calling terminal as a cause number in a cause of an information element attached to the DISCONNECT message sent to the calling terminal from the network.

### ==Cause in a DISCONNECT message==

In the ITU-T Recommendation Q.931, classes and numbers of cause displays attached to DISCONNECT messages are defined as follows.

### 1. Normal class

### [Cause No. 1 - Unallocated (unassigned) number]

This cause indicates that the called party cannot be reached because, although the called party number is in a valid format, it is not currently allocated (assigned).

### [Cause No. 2 - No route to specified transit network]

This cause indicates that the equipment sending this cause has received a request to route the call through a particular transit network which it does not recognize. The equipment sending this cause does not recognize the transit network either because the transit network does not exist or because that particular transit network, while it does exist, does not serve the equipment which is sending this cause.

### [Cause No. 3 - No route to destination]

This cause indicates that the called party cannot be reached because the network through which the call has been routed does not serve the destination desired.

### [Cause No. 6 - Channel unacceptable]

This cause indicates that the channel selected as a result of channel selecting is not acceptable to the calling party.

### [Cause No. 7 - Call awarded and being delivered in an established channel]

This cause indicates that the user has been awarded the incoming call, and that the incoming call is being connected to a channel already established to that user for similar calls (e.g. packet-mode X.25 virtual calls).

### [Cause No. 16 - Normal call clearing]

This cause indicates that the call is being cleared because one of the users involved in the call has requested that the call be cleared. Under normal situations, the source of this cause is not the network.

### [Cause No. 17 - User busy]

This cause is used to indicate that the called party is unable to accept another call because the user busy condition has been encountered. In this case, it is noted that the user equipment is compatible with the call.

### [Cause No. 18 - No user responding]

This cause is used when a called party does not respond to a call establishment message with either an alerting or connect indication within the prescribed period of time allocated (Expiry of the timer T303 or T310 defined in the Recommendation).

### [Cause No. 19 - No answer from user (user alerted)]

This cause is used when the called party has been alerted but does not respond with a connect indication within a prescribed period of time. This cause is not necessarily generated by JT-Q931 procedures but may be generated by internal network timers.

### [Cause No. 20 - Subscriber absent]

This cause value is used when a mobile station has logged off with a signaling procedure through a radio bus, or a radio communication is unable to establish with a mobile station (due to interference, out of range, power off, and so forth).

### [Cause No. 21 - Call rejected]

This cause indicates that the equipment sending this cause does not wish to accept this call, although it could have accepted the call because the equipment sending this cause is neither busy nor incompatible.

### [Cause No. 22 - Number changed]

This cause is returned to a calling party when the called party number indicated by the calling party is no longer assigned. The new called party number may optionally be included in the diagnostic field.

### [Cause No. 26 - Non-selected user clearing]

This cause indicates that the user has not been awarded the incoming call.

### [Cause No. 27 - Destination out of order]

This cause indicates that the destination indicated by the user cannot be reached because the interface to the destination is not functioning correctly. The term "not functioning correctly" indicates that a signaling message was unable to be delivered to the remote party; e.g. a physical layer or data link layer failure at the remote party, or user equipment off-line.

### [Cause No. 28- Invalid number format (address incomplete)]

This cause indicates that the called party cannot be reached because the called party number is not in a valid format or is not complete.

### [Cause No. 29 - Facility rejected]

This cause is returned when the network cannot provide a facility requested by the user.

### [Cause No. 30 - Response to STATUS ENQUIRY]

This cause is included in the STATUS message when the reason for generating the STATUS message was the prior receipt of a STATUS ENQUIRY message.

### [Cause No. 31 - Normal, unspecified]

This cause is used to report a normal event only when no other cause in the normal class applies.

### 2. Resource unavailable class

### [Cause No. 34 - No circuit/channel available]

This cause indicates that there is no appropriate circuit/channel presently available to handle the call.

### [Cause No. 38 - Network out of order]

This cause indicates that the network is not functioning correctly and that the condition is likely to last a relatively long period of time; e.g. immediately re-attempting the call is not likely to be successful.

### [Cause No. 41 - Temporary failure]

This cause indicates that the network is not functioning correctly and that the condition is not likely to last a long period of time; e.g. the user may wish to try another call attempt almost immediately.

### [Cause No. 42 - Switching equipment congestion]

This cause indicates that the switching equipment generating this cause is experiencing a period of high traffic.

### [Cause No. 43 - Access information discarded]

This cause indicates that the network could not deliver access information to the remote user as requested, i.e. user-to-user information, low layer compatibility, high layer compatibility, or sub-address, as indicated in the diagnostic. It is noted that the particular type of access information discarded is optionally included in the diagnostic.

### [Cause No. 44 - Requested circuit/channel not available]

This cause is returned when the circuit or channel indicated by the requesting entity cannot be provided by the other side of the interface.

### [Cause No. 47 - Resource unavailable, unspecified]

This cause is used to report a network congestion event only when no other cause in the network congestion class applies.

### 3. Service or option unavailable class

### [Cause No. 49 - QOS not available]

This cause is used to report that the requested QOS, as defined in Recommendation X.213, cannot be provided (e.g. throughput or transit delay cannot be supported).

### [Cause No. 50 - Requested facility not subscribed]

This cause indicates that the supplementary service requested is not provided by the network because the user has not completed the necessary procedure for administration.

### [Cause No. 57 - Bearer capability not authorized]

This cause indicates that the user has requested a bearer capability which is implemented by the equipment which generated this cause but the user is not authorized to use.

### [Cause No. 58 - Bearer capability not presently available]

This cause indicates that the user has requested a bearer capability which is implemented by the equipment which generated this cause but which is not available at this time.

### [Cause No. 63 - Service or option not available, unspecified]

This cause is used to report a service or option not available event only when no other cause in the service or option not available class applies.

### 4. Service not implemented class

### [Cause No. 65 - Bearer capability not implemented]

This cause indicates that the equipment sending this cause does not support the bearer capability requested.

### [Cause No. 66 - Channel type not implemented]

This cause indicates that the equipment sending this cause does not support the channel type requested.

### [Cause No. 69 - Requested facility not implemented]

This cause indicates that the equipment sending this cause does not support the requested supplementary service.

### [Cause No. 70 - Only restricted digital information bearer capability is available]

This cause indicates that an equipment has requested an unrestricted bearer service but that the equipment sending this cause only supports the restricted version of the requested bearer capability.

### [Cause No. 79 - Service or option not implemented, unspecified]

This cause is used to report a service or option not implemented event only when no other cause in the service or option not implemented class applies.

### 5. Invalid message class

### [Cause No. 81 - Invalid call reference value]

This cause indicates that the equipment sending this cause has received a message with a call reference which is not currently in use on the user-network interface.

### [Cause No. 82 - Invalid channel number]

This cause indicates that the equipment sending this cause has received a request to use a channel not activated on the interface for a call. For example, if a user has subscribed to those channels numbered from 1 to 12 and the user equipment or the network attempts to use channels 13 through 23, this cause is generated.

### [Cause No. 83 - A suspended call exists, but this call identity is not in use]

This cause indicates that a call resume has been attempted with a call identity which differs from that in use for any presently suspended call(s).

### [Cause No. 84 - Suspended call identity in use]

This cause indicates that the network has received a call suspended request containing a call identity (including the null call identity) which is already in use for a suspended call within the domain of interfaces over which the call might be resumed.

### [Cause No. 85 - No call suspended]

This cause indicates that the network has received a call resume request containing a call identity information element which presently does not indicate any suspended call within the domain of interfaces over which calls may be resumed.

### [Cause No. 86 - Call having the requested call identity has been cleared]

This cause indicates that the network has received a call resume request containing a call identity information element indicating a suspended call that has in the meantime been cleared while suspended (either by network time-out or by the remote user) .

### [Cause No. 87 - User not member of CUG]

See the specification of a supplementary service.

### [Cause No. 88 - Incompatible destination]

This cause indicates that the equipment sending this cause has received a request to establish a call which has low layer compatibility, high layer compatibility, or other compatibility attributes (e.g. data rate) which cannot be accommodated.

### [Cause No. 91 - Invalid transit network selection]

This cause indicates that a transit network identification was received which is of an incorrect format as defined separately.

### [Cause No. 95 - Invalid message, unspecified]

This cause is used to report a null message event only when no other cause in the null message class applies.

### 6. Protocol error (e.g. unknown message) class

### [Cause No. 96 - Mandatory information element is missing]

This cause indicates that the equipment sending this cause has received a message which is missing an information element which must be present in the message (a mandatory information element) before that message can be processed.

### [Cause No. 97 - Message type non-existent or not implemented]

This cause indicates that the equipment sending this cause has received a message with a message type it does not recognize either because this is a message not defined or defined but not implemented by the equipment sending this cause.

### [Cause No. 98 - Message not compatible with call state or message type non-existent]

This cause indicates that the equipment sending this cause has received a message such that the procedures do not indicate that this is a permissible message to receive while in the call state, or a STATUS message was received indicating an incompatible call state.

### [Cause No. 99 - Information element non-existent

This cause indicates that the equipment sending this cause has received a message which includes information element(s) not recognized because the information element identifier(s) are not defined or are defined but not implemented by the equipment sending the cause. However, the information element is not required to be present in the message in order for the equipment sending the cause to process the message.

### [Cause No. 100 - Invalid information element contents]

This cause indicates that the equipment sending this cause has received an information element which it has implemented; however, one or more fields in the information element are coded in such a way which has not been implemented by the equipment sending this cause.

### [Cause No. 101 - Message not compatible with call state]

This cause indicates that a message has been received which is incompatible with the call state.

### [Cause No. 102 - Recovery on timer expiry]

This cause indicates that a procedure has been initiated by the expiry of a timer in association with error handling procedures of the layer 3 specification.

### [Cause No. 111 - Protocol error, unspecified]

This cause is used to report a protocol error event only when no other cause in the protocol error class applies.

### 7. Interworking class

### [Cause No. 127 - interworking, unspecified]

This cause indicates that there has been interworking with a network which does not provide causes for actions it takes. Thus, the precise cause for a message which is being sent cannot be ascertained.

### ==Determination of Effectiveness of Telephone Number==

As shown in the flow chart in Fig. 2, when the network has received a call including a SETUP message sent by the telephone number research device 3 and send back an ALERTING or CONNECT message in the SETUP sequence 200, the step 202 or 203 to steps 301→ 302→303 are processed. Then, the telephone number research device 3 immediately sends a DISCONNECT message to the network to perform a clear sequence, and the telephone number in the SETUP message is determined effective and is added to an effective telephone number list. Through the preceding steps, confirmation of a telephone number is completed.

When a DISCONNECT message is sent by the network because the SETUP message sent by the calling party (i.e., the telephone number research device 3) is not accepted in the setup sequence 200, the step 204 to steps 401, 402 are processed. The calling party immediately performs a clear sequence and picks up a cause number of the information element attached to the DISCONNECT message sent by the network. The telephone number in the SETUP message is determined either effective, null, or deferred, according to the cause.

### (a) Effective telephone numbers

If the cause number picked up in step 402 conforms to either of the following ones, the telephone number in the SETUP message is determined effective and is added to an effective telephone number list (Steps 403→404).

### [Cause No. 3 - No route to destination]

### [Cause No. 7- Call awarded and being delivered in an established channel]

### [Cause No. 16 - Normal call clearing]

### [Cause No. 17 - User busy]

### [Cause No. 18 - No user responding]

### [Cause No. 19 - No answer from user (user alerted)]

### [Cause No. 20 - Subscriber absent]

### [Cause No. 21 - Call rejected]

### [Cause No. 27 - Destination out of order]

### [Cause No. 49 - QOS not available]

### [Cause No. 50 - Requested facility not subscribed]

### [Cause No. 57 - Bearer capability not authorized]

### [Cause No. 58 - Bearer capability not presently available]

### [Cause No. 63 - Service or option not available, unspecified]

### [Cause No. 65 - Bearer capability not implemented]

### [Cause No. 66 - Channel type not implemented]

### [Cause No. 69 - Requested facility not implemented]

### [Cause No. 70 - Only restricted digital information bearer]

### [Cause No. 79 - Service or option not implemented, unspecified]

### [Cause No. 88 - Incompatible destination]

### (b) Number changed

When the cause number picked up in step 402 corresponds to [Cause No. 22- Number changed], a new telephone number contained in a diagnosis information field of the cause is retrieved to be added to the effective telephone number list (Steps 403→405→406).

### (c) Null telephone number

If the cause number picked up in step 402 conforms to either of the following ones, the telephone number in the SETUP message is determined null and is added to a null telephone number list. (Steps 403→405→407→408)

### [Cause No. 1 - Unallocated (unassigned) number]

### [Cause No. 2 - No route to specified transit network]

### [Cause No. 6 - Channel unacceptable]

### (d) Determination deferred

If the cause number picked up in step 402 does not correspond to either of the cause numbers depicted in any of steps 403, 405, or 407, the telephone number in the SETUP message is not determined either effective or null and is added to a deferred telephone number list (Steps 403→405→407→409).

If inspection of one telephone number is completed through the preceding steps, step 501 is performed to confirm if all the telephone number contained in the telephone number list which is to be cleaned have been checked. If not, the process is returned to the first step 100 to inspect the subsequent telephone number through the above described sequence. If all the telephone numbers in the list have been checked, step 502 is performed to output a revised list in a predetermined format.

### ==Situation of Actual Operation==

The telephone number lists which are to be researched according to the present invention are telephone number lists in member lists of e-commerce systems. Such a telephone number list comprises telephone numbers of subscribers to an analog telephone network, subscribers to an ISDN, subscribers to a mobile phone network, and subscribers to a PHS network. In case that the telephone number list in this current situation is researched through the above processes, the following communications will be made between the research device 3 of the present invention and the ISDN station (the network).

### (A) Called party number is an effective subscriber number of an analog telephone network.

The telephone number research device 3 of the present invention sends a SETUP message containing an "unrestricted digital" information designated as a bearer capability, thus the network sends back a DISCONNECT message having [Cause No. 3 - No route to destination] . Therefore, the telephone number research device 3 adds the telephone number to an effective telephone number list. Attention should be directed to the fact that the called party which is designated by the telephone number to be checked is never alerted during checking and determination of the number. In other words, from the called party's point of view, which has a number to be checked, the called party is never annoyed by a useless call to which the called party is compelled to respond.

### (B) The called party number is an effective subscriber number to an ISDN or a PHS

In this case, mode of communication between two parties depends on the condition of the facility at the called party. The called terminal (called party) is alerted by the CALLING message sent from the present telephone number research device 3. If the called party responds the alerting, step 301 is processed in the flow chart in Fig. 2. The telephone number research device 3 starts a clear sequence and adds the called party number to the effective number list. In case that a DISCONNECT message is sent back from the network, if the cause number in the DISCONNECT message conforms to either of #7, #16, #17, #18, #19, #20, #21, #27, #49, #50, #57, #58, #63, #65, #66, #70, #79, the called party number is added to the effective number list, and if the cause number corresponds to #2 or #6, the called party number is added to the null number list. If the cause number in the DISCONNECT message does not corresponds to any of the above cause numbers, the called party number is included in the deferred number list.

It should be noted that the ways of classification of the called party number into the categories "effective", "null", or "deferred" according to the cause number may not be best described in the preferred embodiment. It may be more appropriate to classify some cause in "effective" or "null" than in "deferred", based on more precise investigation of usage of an ISDN by the subscribers and response of the network to the subscribers. The present invention would never restrict such flexible operations of the telephone number research device 3.

### (C) Called party number is an effective subscriber number to a mobile phone

The telephone number research device 3 of the present invention sends a SETUP message containing "audio" information designated as a bearer capability. The mobile phone network sends an ALERTING signal to the called terminal (i.e., the mobile phone) , and also sends an ALERTING message back to the telephone number research device 3. If the called terminal is off-hooked, the network sends a CONNECT message back to the telephone number research device 3. As soon as the telephone number research device 3 receives the ALERTING message or the CONNECT message from the network, the device 3 sends a DISCONNECT message to the network to conduct a clear sequence. At the same time, the device 3 determines the called telephone number to be an effective number. In some cases the called terminal is rung for an instant. However, since the line is immediately disconnected, it is possible to minimize the annoyance put to a user of the called terminal. When "3.1 audio" is set as the bearer capability, the same operation will be carried out. Therefore, in the present specification, the bearer capability of "audio" and the bearer capability of "3.1 audio" are regarded as equivalent.

### (D) Called party number has changed.

In this case, the network sends back a DISCONNECT message containing [Cause No. 22 - Number changed], without respect to the fact whether the subscriber number is of an analog telephone network, an ISDN, a mobile phone network, or a PHS network. The telephone number research device 3 receives the message and picks up a new telephone number contained in a diagnosis information field of the cause, and adds the retrieved new number to the effective number list.

### (E) The called party number is not currently in use.

In this case, the network sends back a DISCONNECT message containing [Cause No. 1 - Unallocated (unassigned) number], without respect to the fact whether the subscriber number is of an analog telephone network, an ISDN, a mobile phone network, or a PHS network. The telephone number research device 3 receives the message to add the called party number to the null number list.

### ==Using the Telephone Number Research Result==

As described above, the transaction server 1 transfers a telephone number list of a member list to the telephone number research device 3, and the research device 3 researches whether the telephone numbers listed in the list are effective or null. Then the device 3 sends the research result back to the server 1. Such an operation is repeated for an appropriate number of times at an appropriate timing.

When a member-user computer 2 accesses the transaction server 1 to purchase an item handled by the transaction server 1, the server 1 can identify the accessing member-user by, for example, making the member-user enter a member ID number at an appropriate timing during the transaction procedure process.

Receiving such member ID number information for identifying the member-user, the transaction server 1 refers to the above-mentioned member-list, and checks to see whether the telephone number of the accessing member-user has been determined "changed" or "null" by the telephone number research device 3. If the telephone number of the member-user is not "changed" or "null", the transaction procedure process proceeds in a usual manner.

If the telephone number of the accessing member-user is "changed" or "null", the transaction server 1 sends a WARNING message to the member-user computer 2. This WARNING message contains information such as to encourage the member-user to inform his personal information, such as his telephone number, if there have been any changes.

In this embodiment, the e-commerce system is realized by using the mechanism of the Internet (WWW). Thus, the transaction server 1 may send, to the member-user computer 2, an image data created based on a digital language for describing documents such as HTML. The image data is visualized by a browser of the member-user computer 2. When the user conducts an input operation, such as writing on the displayed image or clicking on the image, the transaction server 1 recognizes the input information, and the process is proceeded to the next step. Techniques for such a process are well known in the art, and thus, will not be described any further herein.

In the present embodiment, the WARNING message is sent to the member-user computer 2 in the form of an HTML document. In this WARNING message document, personal information, such as name, address, telephone number or e-mail address, of the member recorded to the member list is written in a predetermined format. Further, a message, such as "Please confirm your personal information. If there are any changes, please change the data displayed, check to see if there are no mistakes, and click the CHANGE REGISTERED INFORMATION button," accompanies the personal information.

The user sees the WARNING message on the display of the member-user computer 2, and may, for example, change and renew the address and telephone number data and click the CHANGE REGISTERED INFORMATION button. The changed data is sent to the transaction server 1. The transaction server 1 conducts a predetermined data-confirmation procedure, and changes the appropriate data in the member list.

Although not shown in Fig. 1, the transaction server 1 is communicatably connected to a computer of a manager of the e-commerce system via a private line. When a situation where a WARNING message is sent to a member-user computer 2 as described above occurs, the transaction server 1 creates a report document data for specifically informing such a situation, and sends the data to the manager computer. The report document is used by the manager for taking measures in member management.

Recently, e-commerce systems in which an Internet-accessible mobile phone is used as a user terminal are becoming increasingly popular. It is to be noted that the present invention can be applied to such a system. In this case, it is possible to send the WARNING message to a user of a mobile phone through the voice call channel.

In another embodiment of the present invention, it is preferable to change the message to be sent to the accessing user computer 2 according to whether the procedure conducted between the user computer 2 and the transaction server 1 is a member sign-up procedure, or if the procedure is an e-commerce procedure conducted after sign-up.

As described above, in the e-commerce system of the embodiment of the present invention, there is a need for a user to sign-up as a member. During this sign-up procedure, there is a possibility for the user to make a mistake while typing. Thus, in the process of the sign-up procedure conducted between the user computer 2 and the transaction server 1, if the telephone number of the member-user is determined "null" by the research device 3, the server 1 sends a WARNING message which is such as to encourage the member-user to inform his personal information, such as his telephone number, if there are any mistakes.

In the present embodiment, the WARNING message is sent to the member-user computer 2 as an HTML document. The WARNING message document may be such as "If there are any mistakes in your personal information, please change the data displayed, check to see if there are no mistakes, and click the CHANGE REGISTERED INFORMATION button.".

In an e-commerce procedure process conducted between a member-user computer 2, which is of a member-user who has signed-up as a member, and the transaction server 1, if the telephone number of the member-user has been determined "null" by the research device 3, the server 1 sends a WARNING message such as to encourage the member-user to inform his personal information, such as his telephone number, if there have been any changes. This WARNING message is also sent to the member-user computer 2 in the form of an HTML document. In the WARNING message document, personal information, such as name, address, telephone number or e-mail address, is written in a predetermined format. Further, a message, such as "Please confirm your personal information. If there have been any changes in your personal information, please change the data displayed, check to see if there are no mistakes, and click the CHANGE REGISTERED INFORMATION button," accompanies the personal information.

In the course of carrying out a sign-up procedure, if a telephone number of a user is determined "null" by the research device 3, there is a possibility that the user made a mistake in entering his personal information. That is, for example, the user may have entered a former telephone number forgetting that he had moved. On the other hand, in the course of carrying out the e-commerce procedure, if a telephone number of a member-user is a number that was determined "null" by the research device 3, there is a great possibility that the personal information such as telephone number has changed. Therefore, by changing the message to be sent to the accessing user computer 2 according to whether the process conducted between the user computer 2 and the transaction server 1 is of a sign-up procedure or an e-commerce procedure, it is possible to send a message which is more realistic and reflects the actual circumstance to the user computer 2.

As described above, according to the present embodiment of the invention, it is possible to promptly detect that a previously-registered telephone number has gone out of use by focusing on the telephone number in the personal information of a user of an e-commerce system. Thus, it is possible to prevent transaction trouble. Particularly, since a server infers a member-user whose personal information seems to have been changed, confirms the change with the member-user in the process of conducting actual transaction, and, if necessary, makes the member-user change the personal information data instantly, it is possible to considerably shorten the period of time from when the personal information of the user was actually changed to when such change in information is reflected to the member list of the transaction server. It is possible to reduce transaction trouble in this sense also.

Although the preferred embodiment of the present invention has been described in detail, it should be understood that various changes, substitutions and alternations can be made therein without departing from spirit and scope of the inventions as defined by the appended claims.

## Claims

1. A personal information verification method in an electronic-commerce system worked by a server communicating with a user terminal via a network, the method comprising:
a step wherein personal information of a plurality of member-users who have registered as a member is made into a database as a member list, the member list containing a telephone number for each member;
a step wherein a telephone number research means connected to an ISDN as a subscriber terminal
sends a SETUP message, which defines a telephone number on the member list as a called party number and includes a bearer capability information element designating unrestricted digital, audio, or the like, to the ISDN;
obtains a message in reply thereto from the ISDN and performs a clear sequence; and
analyzes the obtained message to detect whether the telephone number is effective or not; and
a step, in a process where a member-user terminal and the server communicates to proceed an electronic-commerce procedure, wherein if a telephone number of a member-user using the member-user terminal was determined to be null by the research means, a WARNING message is sent to the member-user terminal, the WARNING message being such as to encourage the member-user to make a notification if there have been any changes in his personal information such as his telephone number.

2. A personal information verification method in an electronic-commerce system according to claim 1 **characterized in that** the WARNING message is displayed and output as an image on a display of the member-user terminal.

3. A personal information verification method in an electronic-commerce system according to claim 1 **characterized in that** the WARNING message is output as audio information from a speaker of the member-user terminal.

4. A personal information verification method in an electronic-commerce system according to claim 1 **characterized in that** the WARNING message includes procedure information for notification of the change in the personal information.

5. A personal information verification method in an electronic-commerce system according to claim 1 **characterized in that** the server is communicatably connected to a computer of a manager of the e-commerce system, and an event in which the WARNING message was sent to the member-user terminal is informed to the manager computer.

6. A personal information verification method in an electronic-commerce system according to claim 1 **characterized in that** the research means is mainly constituted of a computer separate from the server, and the computer as the research means and the server are communicatably connected.

7. A personal information verification method in an electronic-commerce system according to claim 1 **characterized in that** the research means repeats a research on each of the telephone numbers of respective members listed on the member list at appropriate timings, and records an event where a telephone number has been determined null.

8. A personal information verification method in an electronic-commerce system according to claim 1 **characterized in that**, when the server and a member-user terminal communicate to begin an electronic-commerce procedure process, the research means performs a research on the telephone number of the member-user.

9. A personal information verification method in an electronic-commerce system worked by a server communicating with a user terminal via a network, the method comprising:
a step wherein personal information of a plurality of member-users who have registered as a member is made into a database as a member list, the member list containing a telephone number for each member;
a step wherein a telephone number research means connected to an ISDN as a subscriber terminal
sends a SETUP message, which defines a telephone number on the member list as a called party number and includes a bearer capability information element designating unrestricted digital, audio, or the like, to the ISDN;
obtains a message in reply thereto from the ISDN and performs a clear sequence; and
analyzes the obtained message to detect whether the telephone number is effective or not; and
a step wherein, in a process where a user terminal and the server communicate to proceed a sign-up procedure, if a telephone number of a the user using the user terminal was determined to be null by the research means, a WARNING message is sent to the user terminal, the WARNING message being such as to encourage the user to make a notification if there are any mistakes in his personal information such as his telephone number; and, in a process where a member-user terminal, which is of a member-user who has signed-up as a member, and the server communicate to proceed an electronic-commerce procedure, if a telephone number of a member-user using the member-user terminal was determined to be null by the research means, a WARNING message is sent to the member-user of the member-user terminal, the WARNING message being such as to encourage the member-user to make a notification if there have been any changes in his personal information such as his telephone number.

10. A method of managing a list of data entries for verifiable users of a network-based facility, such as an e-commerce system, the list being held in a server with which user terminals may communicate via the network, and each entry including a telephone number for the respective user, the method including a step of calling the telephone number of a given entry, a step of determining from the response to the calling of said telephone number whether or not that telephone number is effective, and a step of storing the result of the determining step for subsequent use in controlling a response to a network-based request by the user associated with the given entry.

11. A method for verifying personal information of a pre-registered system user based on the user's telephone number, by using means automatically operated in a computer system, during a process in which a user terminal and a transaction server (1) communicate to execute an electronic-commerce procedure, such that if a pre-registered telephone number of a system user using the user terminal has previously been determined to be ineffective by a telephone number research device, a WARNING message is sent to the user terminal.
